(19) Europäisches Patentamt
European Patent Office
Office européen des brevets

(11) **EP 4 403 874 A2**

(12) **DEMANDE DE BREVET EUROPEEN**

(43) Date de publication:
**24.07.2024 Bulletin 2024/30**

(51) Classification Internationale des Brevets (IPC):
***G01C 19/38*** *(2006.01)*

(21) Numéro de dépôt: **24181600.8**

(52) Classification Coopérative des Brevets (CPC):
**G01C 19/38; G01C 21/18**

(22) Date de dépôt: **28.11.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.12.2015 FR 1561888**

(62) Numéro(s) de document de la (des) demande(s)
initiale(s) en application de l'article 76 CBE:
**16806008.5 / 3 384 241**

(71) Demandeur: **Innalabs Limited
Dublin 15 (IE)**

(72) Inventeurs:
• **BEITA, Jose
Ratoath (IE)**

• **RENAULT, Alain
06110 Le Cannet (FR)**
• **OKON, Isaak
Brooklyn, 11224 (US)**

(74) Mandataire: **Ipsilon
Le Centralis
63, avenue du Général Leclerc
92340 Bourg-la-Reine (FR)**

Remarques:
Cette demande a été déposée le 12.06.2024 comme demande divisionnaire de la demande mentionnée sous le code INID 62.

(54) **SYSTÈME DE NAVIGATION INERTIELLE À PRÉCISION AMÉLIORÉE**

(57) L'invention concerne un système de navigation inertielle pour un porteur comportant un coeur comportant des capteurs gyroscopiques permettant de déterminer sa vitesse angulaire suivant trois axes définissant un trièdre de référence, deux des axes définissant un plan de référence et le troisième axe étant perpendiculaire à ce plan. Le dispositif comporte des moyens de commande et de contrôle permettant de mettre le coeur en rotation autour du troisième axe et de déterminer la direction du nord géographique à partir des informations fournies par les capteurs gyroscopiques et par un accéléromètre placé dans le plan de référence; la rotation du coeur étant réalisée avec une période pour laquelle la valeur de la variance d'Allan de l'erreur de stabilité des capteurs gyroscopiques est inférieure à une valeur donnée garantissant la précision avec laquelle la direction du nord géographique peut-être connue.

Fig. 3

## Description

*Contexte de l'invention- Art antérieur*

La présente invention se rapporte aux systèmes inertiels permettant de définir un cap, l'attitude, les coordonnées et la vitesse d'un porteur.

Ces systèmes sont bâtis à partir de gyroscopes ou de gyromètres et d'accéléromètres. Ces différents capteurs sont généralement désignés par le terme générique de capteurs inertiels.

Un gyroscope est un senseur capable de détecter les rotations absolues par rapport aux étoiles selon un axe d'entrée.

Un gyromètre est un senseur capable de détecter les vitesses de rotation absolues par rapport aux étoiles selon un axe d'entrée.

Un accéléromètre est un senseur capable de détecter les accélérations spécifiques par rapport aux étoiles selon un axe d'entrée.

Les gyromètres et gyroscopes sont construits à partir des propriétés des toupies ou d'éléments vibrants pour les capteurs mécaniques ou à partir de l'effet Sagnac pour les capteurs optiques tels que gyroscopes laser ou gyromètres à fibre optique.

Il existe des gyroscopes et des gyromètres qui possèdent plusieurs axes d'entrées. Il existe d'autres technologies de gyroscopes et de gyromètres.

Les accéléromètres sont mécaniques et sont bâtis autour d'une masse sismique asservie à se maintenir au centre d'un entrefer à l'aide d'un moteur électromagnétique ou électrostatique, la commande du moteur étant l'image de l'accélération spécifique.

Il existe des accéléromètres mécaniques pour lesquels la masse sismique n'est pas asservie en position.

Il existe des accéléromètres pour lesquels la masse sismique exerce une traction/compression d'une lame vibrante, l'évolution de la fréquence de cette lame est la mesure de l'accélération.

Il existe par ailleurs d'autres technologies d'accéléromètres.

Dans les figures qui suivent ces senseurs sont simplement représentés par leur axe d'entrée de mesure.

Les gyromètres et gyroscopes sont caractérisés principalement par leur faux zéro. Il est appelé dérive et il représente la valeur de sortie du capteur pour une entrée en angle (cas du gyroscope) ou en vitesse angulaire (cas du gyromètre) nulle.

Cette dérive est variable dans le temps et peut être considérée comme un bruit qu'il est habituel de caractériser selon la courbe de la variance d'Allan.

De la même façon, le faux zéro d'un accéléromètre, appelé biais est la valeur de sortie du capteur pour une accélération d'entrée nulle.

Ce faux zéro est variable et il est aussi habituel de le caractériser par sa courbe de variance d'Allan.

Ces systèmes inertiels permettant de définir un cap, l'attitude, les coordonnées et la vitesse d'un porteur sont bien connus dans l'art antérieur par des réalisations dites « à cardans » ou par des réalisations dites à « composants liés (« strapdown system » en anglais).

Les systèmes à cardans sont généralement constitués d'un coeur portant trois gyroscopes et trois accéléromètres selon un trièdre orthonormé définissant un système d'axes de référence. Ce coeur est porté par trois ou quatre axes de cardan.

Les axes de référence sont stabilisés par les informations gyroscopiques qui permettent d'établir des commandes d'asservissement pilotant les moteurs de cardan. Les axes de référence sont ainsi maintenus selon une orientation prédéfinie quels que soient les mouvements du porteur, à la dérive prêt des gyroscopes.

Les accéléromètres permettent alors de donner une orientation particulière à ce système en maintenant deux axes de référence pointés dans le plan horizontal (perpendiculaire à la verticale locale).

Lorsque ceci est réalisé, les gyroscopes permettent de pointer un axe horizontal vers le nord géographique défini par l'axe de rotation de la terre.

Les accéléromètres dans le plan horizontal sont également utilisés de façon à constituer des boucles dites « de Schuler » amorties à l'aide d'une information externe au système, comme par exemple une information de vitesse délivrée par un loch électromagnétique ou un loch Doppler pour un navire ou une sonde Pitot pour un avion.

Les informations accélérométriques permettent de calculer les déplacements sur le globe terrestre, assurant ainsi la navigation du véhicule porteur du système.

Les capteurs angulaires des cardans permettent de connaitre l'attitude du véhicule et ainsi délivrent des informations qui peuvent être utilisées pour son pilotage éventuel.

Ces systèmes nécessitent l'utilisation de gyroscopes et d'accéléromètres extrêmement stables à partir de l'instant où le système est calibré (entrée des informations de position et de vitesse initiales) puis sur toute la période de navigation.

Différentes techniques sont mises en oeuvre pour minimiser le poids des erreurs induites par les senseurs, comme par exemple une boucle d'amortissement dite « de Schuler ».

En général, pour ces systèmes optimisés, seules les erreurs des gyroscopes conduisent à des erreurs de navigation qui croissent avec le temps et par exemple une stabilité meilleure que 0.01 degrés par heure sera en définitive nécessaire pour atteindre une erreur de position de l'ordre de 1 nautique après une heure de navigation.

Les technologies de senseurs inertiels permettant ce type de performance sont aujourd'hui des technologies de type RLG (gyrolasers) ou FOG (gyromètre à fibre optique) pour lesquelles les coûts de fabrication sont très élevés.

Les erreurs des accéléromètres conduisent quant à elles à des erreurs de position bornées avec le temps et 150 micros g de stabilité de biais suffisent à générer une erreur de position de 1 nautique.

Là encore, seules quelques technologies de senseurs inertiels permettent d'atteindre ces performances, comme par exemple le haut de gamme des pendulaires asservis (« Servo pendulous accelerometer ») et pour lesquelles les coûts de fabrication sont très élevés.

Les progrès dans le domaine des composants électroniques en général, et des calculateurs en particulier (performance, puissance, coût), ont permis de supprimer les cardans et les équipements de codage angulaire des plateformes décrites ci-dessus en échantillonnant à haute cadence les informations des accéléromètres et des gyroscopes, et en reconstituant par calcul une « plateforme virtuelle » stabilisée comme celles issues du coeur à cardans. Ces systèmes sont dits à « composants liés ». Les coûts de tels systèmes de navigation ont certes diminué, la fiabilité a certes augmenté (moins de pièces mécaniques et moins de connexions électriques), mais en définitive ces coûts restent élevés car comme pour les systèmes classiques à cardans, l'essentiel du coût du système est le résultat du coût des senseurs.

### *Présentation de l'invention*

L'objet de la présente invention porte sur l'amélioration des systèmes conventionnels à cardans pour obtenir des performances de navigation haut de gamme tout en utilisant des senseurs de performance modérée (1 à 10 degrés par heure par exemple pour le gyroscope ou le gyromètre et 1 à 10 mg pour les accéléromètres), ceci conduisant donc a un coût système significativement moins élevé.

A cet effet l'invention a pour objet un système de navigation inertielle d'un porteur, ce porteur comportant un coeur monté sur un système de cardans à trois axes occupant une position fixe par rapport au porteur, ledit coeur comportant des capteurs gyroscopiques permettant de déterminer sa vitesse angulaire suivant trois axes définissant un trièdre de référence, deux des axes définissant un plan de référence et le troisième axe, étant choisi perpendiculaire audit plan de référence.

Selon l'invention, le système comporte en outre des moyens de commande et de contrôle configurés d'une part pour mettre le coeur en rotation continue ou alternée autour du troisième axe et d'autre part pour exploiter les informations fournies par les capteurs gyroscopiques ainsi que celles fournies par un accéléromètre placé dans le plan de référence ainsi défini, de façon à maintenir le plan de référence du coeur dans une attitude donnée par rapport au plan horizontal ou au moins à pouvoir déterminer l'attitude du plan de référence par rapport au plan horizontal et de façon à déterminer la direction du nord géographique dans le repère formé par les axes définissant le plan de référence.

Selon l'invention également, la rotation continue ou alternée est par ailleurs effectuée selon une période déterminée, la valeur de ladite période étant définie de telle façon que pour une durée d'observation égale à cette valeur, la valeur de la variance d'Allan de l'erreur de stabilité des capteurs gyroscopiques soit inférieure à une valeur donnée définie à partir de la précision de détermination du nord géographique souhaitée.

Selon diverse dispositions pouvant être considérées séparément ou, le cas échéant en combinaison avec d'autres dispositions le dispositif selon l'invention peut comporter certaines caractéristiques particulières. Ainsi,

Selon une caractéristique particulière, les moyens de commande et de contrôle sont configurés pour exploiter les informations fournies par les capteurs gyroscopiques ainsi que celles fournies par un accéléromètre placé dans le plan de référence, de façon à déterminer l'attitude du porteur, ses coordonnées géographiques de longitude et de latitude et d'altitude, ainsi que son vecteur vitesse.

Selon une autre caractéristique, les capteurs gyroscopiques comportent des gyroscopes et/ou des gyromètres.

Selon une autre caractéristique, les deux capteurs gyroscopiques définissant le plan de référence sont orientés suivant deux axes perpendiculaires de sorte que le trièdre de référence ainsi formé est un trièdre trirectangle.

Selon une autre caractéristique, les moyens de commande et de contrôle sont configurés de façon à maintenir le plan de référence du coeur dans le plan horizontal, de telle sorte que le troisième axe du trièdre de référence est dirigé à la verticale.

Selon une autre caractéristique, un ou deux axes de cardans sont bloqués en rotation. Seul le troisième axe qui autorise la rotation du coeur autour d'un axe perpendiculaire au plan de référence est équipé d'un codeur angulaire.

L'invention a également pour objet un procédé pour assurer la navigation inertielle d'un porteur comportant un système de navigation inertielle comportant luimême un coeur monté sur un système de cardans à trois axes occupant une position fixe par rapport au porteur, ledit coeur comportant des capteurs gyroscopiques permettant de déterminer sa vitesse angulaire suivant trois axes définissant un trièdre de référence, deux des axes définissant un plan de référence et le troisième axe, étant choisi perpendiculaire audit plan de référence.

Selon l'invention, le coeur est mis en rotation continue ou alternée, selon une période déterminée, autour du troisième axe. La rotation continue ou alternée est effectuée selon une période déterminée, la valeur de ladite période étant définie de telle façon que pour une durée d'observation égale à cette valeur, la valeur de la variance d'Allan de l'erreur de stabilité des capteurs gyroscopiques soit inférieure à une valeur donnée définie à partir de la précision de détermination du nord géographique souhaitée.

Selon l'invention également, les informations fournies par les capteurs gyroscopiques ainsi que celles fournies par un accéléromètre placé dans le plan de référence, sont exploitées de façon, d'une part, à maintenir le plan de référence du coeur dans une attitude donnée par rapport au plan horizontal ou au moins à pouvoir déterminer l'attitude du plan de référence par rapport au plan horizontal et de façon, d'autre part, à déterminer la direction du nord géographique dans le repère formé par les axes définissant le plan de référence.

Selon une disposition particulière du procédé selon l'invention, pour déterminer l'attitude du plan de référence par rapport au plan horizontal et déterminer la direction du nord géographique dans le repère formé par les axes définissant le plan de référence, on réalise les opérations suivantes:

- acquisition des informations modulées délivrées par les senseurs inertiels dont les axes de mesure sont situés dans le plan de référence et l'information fournie par un codeur angulaire codant la rotation du troisième axe;
- élaboration de commandes de pilotage des moteurs cardans perpendiculaires au troisième axe, de façon à déterminer et contrôler l'assiette du plan de référence et de façon à mettre en rotation le troisième axe à partir des informations du capteur gyroscopique porté par cet axe, lesdites commandes étant élaborées à partir desdites informations projetées à l'aide de matrices dans les axes de rotation des cardans;
- détermination, de la phase et de l'amplitude de la modulation des signaux délivrés par les capteurs gyroscopiques et l'accéléromètre dont les axes de mesure sont situés dans le plan de référence, la phase de la modulation définissant l'information d'angle d'orientation des axes de mesure par rapport au Nord géographique, l'amplitude de la modulation définissant l'information d'angle de la Latitude locale, les vitesses selon le méridien local ainsi que le parallèle local et, par intégration, les déplacements selon ces directions;
- calcul de l'assiette du porteur, à partir des données des codeurs angulaires des axes de cardans.

**Présentation des figures**

L'invention sera mieux comprise en examinant les figures 1 à 4 qui représentent

- la figure 1, un exemple de plateforme à 3 axes de cardan;
- la figure 2, un exemple de courbe de variance d'Allan;
- la figure 3, une illustration du principe de détermination de la vitesse de rotation imposée au coeur, conformément à l'invention.
- la figure 4, deux courbes illustrant respectivement la forme des signaux issus d'un capteur gyroscopique disposé dans le plan de référence et d'un codeur angulaire disposé au niveau de l'axe perpendiculaire au plan de référence du coeur.

**Description détaillée**

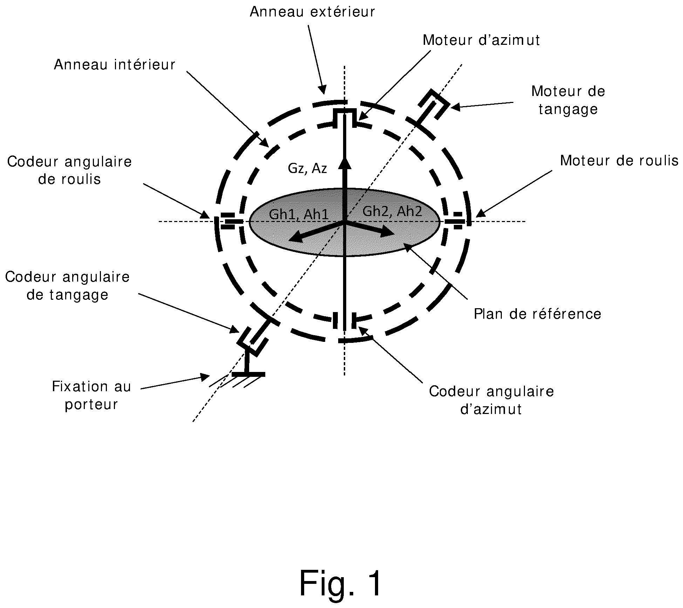

La figure 1 présente un exemple de plateforme dans une structure à 3 axes de cardan, connue de l'art antérieur et pour laquelle on utilise 3 gyroscopes ou gyromètres et 3 accéléromètres. Une telle plateforme peut naturellement être utilisée pour mettre en oeuvre l'invention.

Une configuration avec un quatrième axe de cardan créant une redondance sur l'axe de roulis est généralement utilisée pour les applications à forte dynamique, comme par exemple pour les avions.

Une telle configuration permet de disposer d'une redondance d'informations, soit avec l'axe de roulis, soit avec l'axe d'azimut, ladite redondance permettant au porteur de réaliser des mouvements pour lesquels à aucun moment les axes de cardans ne s'alignent sur des directions qui leurs sont théoriquement interdites, comme par exemple un axe roulis qui pourrait se confondre avec la verticale locale lors d'un looping d'un avion

Cependant, la configuration 3 axes présentée ici est suffisante pour comprendre l'invention décrite dans ce document, invention dont la portée peut être facilement étendue aux systèmes redondés.

Sur l'illustration de la figure 1, Gh1, Gh2, Ah1, Ah2 sont respectivement les capteurs gyroscopiques et les accéléromètres définissant le plan de référence du système. Gz et Az sont quant à eux respectivement le capteur gyroscopique et l'accéléromètre liés à l'axe perpendiculaire au plan de référence ou axe d'azimut ou de verticale.

Les gyroscopes permettent de contrôler les angles des cardans à l'aide des moteurs d'azimut, de roulis et de tangage, de façon à stabiliser l'assiette et l'azimut du coeur qui devient ainsi insensible aux mouvements du porteur et les accéléromètres permettent de corriger l'horizontalité des axes 1 et 2 formant le plan de référence en élaborant des commandes de rotation destinées aux capteurs gyroscopiques, gyroscopes ou gyromètres.

Les axes des cardans sont équipés de codeurs angulaires et de liaisons électriques permettant le passage des signaux soit par contacts tournants, soit par liaisons flexibles dans le cas de débattements limités (généralement sur l'axe de tangage, mais aussi sur l'axe de roulis pour les systèmes de navigation inertiels utilisés sur les navires), ou tout autre moyen technologique adapté limitant les couples de frottement au strict minimum.

Les informations renvoyées par ces codeurs angulaires sont notamment utilisées pour calculer les projections des informations des capteurs du coeur vers les moteurs de cardans au travers des réseaux des chaînes d'asservissement stabilisant le coeur et pour délivrer l'assiette du porteur, ainsi que son cap, à des fins de pilotage par exemple.

L'une des fonctions principale réalisée par les systèmes inertiels est de définir un cap par rapport au Nord géographique.

Selon l'art antérieur le gyroscope Gz permet de faire tourner le coeur autour de l'axe d'azimut pour que, par exemple, Gh2, Ah2 soient orientés vers le nord.

Dans ce cas Gh1 détecte une projection de la rotation terrestre nulle puisqu'il se trouve orienté vers l'Est ou vers l'Ouest, et tout écart permet de

corriger l'erreur d'orientation vers le nord.

Cependant, la performance obtenue est directement liée à la dérive de Gh1.

De la même façon, Ah1 et Ah2 permettent d'orienter les axes dans le plan de référence et tout biais accéléromètrique provoque une erreur.

L'erreur de mesure de Ah1 provoque une projection parasite de la composante verticale de la rotation terrestre qui génère ainsi une erreur d'orientation vers le nord.

La performance du système est donc entre autre liée à la dérive résiduelle du gyroscope Gh1 et au faux zéro résiduel de l'accéléromètre Ah1 supposés orientés à l'est.

Le bruit des senseurs se caractérise en général par la courbe de la variance d'Allan. Cette courbe reporte l'écart type ou la variance du bruit en fonction de l'horizon temporel d'observation.

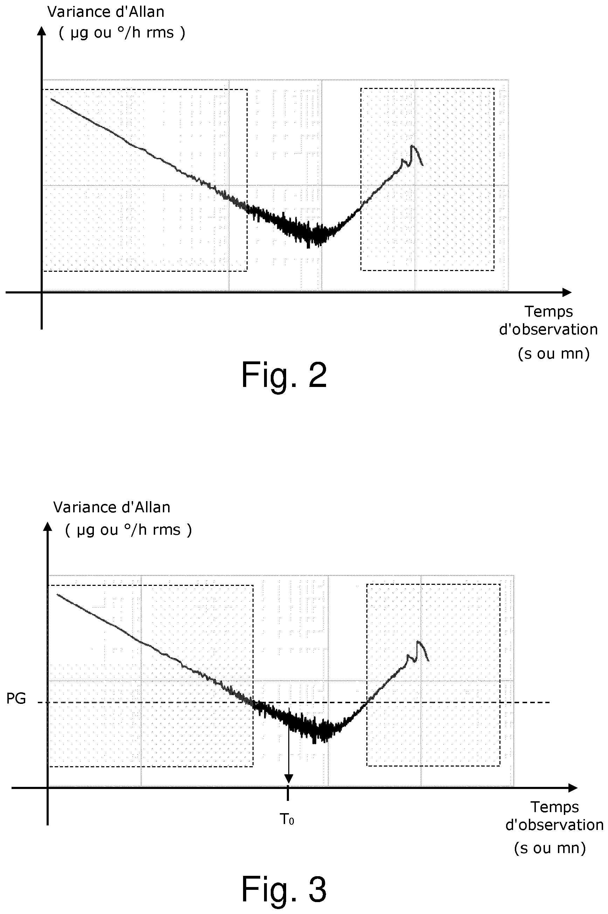

La figure 2 est un exemple de courbe de variance d'Allan obtenue pour des senseurs inertiels en général.

Comme l'illustre la figure 2, la variance d'Allan varie en fonction du temps d'observation et comprend un creux caractéristique appelé couramment creux ou point bas de la variance d'Allan.

Les instabilités constatées à droite du creux, et donc pour des temps d'observation longs, sont généralement le résultat de la sensibilité des senseurs à la température et à ses fluctuations au cours du temps.

En général, on constate un à deux ordres de grandeur entre la valeur atteinte au point bas et la valeur asymptotique atteinte pour des temps très longs.

Les RLG ou les FOG utilisés sur des centrales de navigation de haute performance ont une valeur asymptotique aux temps longs proche de 0.01 degrés par heure.

Le milieu de gamme des gyroscopes de classe tactique atteint quant- à lui 1 à 10 degrés par heure pour ces mêmes temps et ne peut donc pas prétendre à être utilisé pour réaliser des centrales de navigation haut de gamme. Il en va de même pour les accéléromètres.

Une caractéristique de l'invention consiste, de manière nouvelle, à exploiter ce point bas qui apparait pour un temps d'observation déterminé caractéristique du type de capteur considéré, au lieu d'exploiter les propriétés des senseurs constatées pour les temps longs comme le font les systèmes répondant à l'état de l'art antérieur.

Ainsi, si P désigne la performance des senseurs, en matière de stabilité, qu'il est nécessaire de tenir pour obtenir un système de navigation haut de gamme, par exemple quelques 0.01 degrés par heures ou 100 micros g, les senseurs dont le point bas de la variance d'Allan est cohérent de cette valeur deviennent éligibles à cet usage, ce qui qualifie certains des senseurs appartenant au milieu de gamme tactique en vertu de ce qui a été dit précédemment.

Pour cela, le gyroscope Gz vertical est utilisé pour piloter le coeur en rotation autour de l'axe vertical, à une vitesse de révolution $\Omega_0$ cohérente d'une période d'observation $T_0$ située, comme l'illustre la figure 3, dans la zone des creux des variances des senseurs. $\Omega_0$ est défini par la relation suivante:

$$\Omega_0[rad/s] = k \times 2\pi T_0$$

La valeur du paramètre k est optimisée pour que le système réponde à ses spécifications en matière d'estimation de l'angle au Nord géographique et d'estimation de la latitude et de la longitude locale du porteur.

Comme l'illustre la figure 3, l'intersection de PG avec la courbe de variance d'Allan des gyroscopes Gh1 et/ou Gh2 fournit une fenêtre de temps d'observation à l'intérieur de laquelle la valeur de T0 est choisie de façon préférentielle. PG représente la valeur la plus élevée de la variance d'Allan permettant d'obtenir la précision de détermination du nord géographique souhaitée. Cette fenêtre correspond au domaine pour lequel la variance est suffisamment faible pour obtenir les performances inertielles recherchées.

D'autres valeurs de $T_0$ sont également possibles selon le niveau de performance et le type d'optimisation désirés.

Sans que ce soit exclusif, la sortie de Gz est, de façon préférentielle, asservie sur $\Omega_0$, ce qui implique que la vitesse absolue de la rotation du coeur autour de l'axe vertical au sens Galiléen est égale à $\Omega_0$.

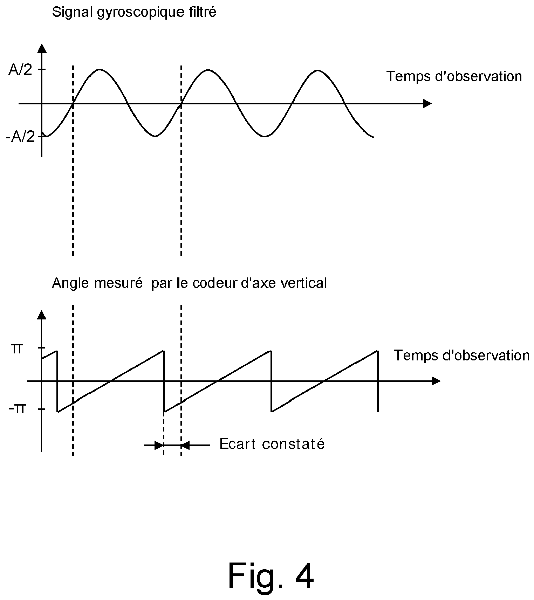

La figure 4 présente deux courbes illustrant respectivement la forme des signaux issus d'un capteur gyroscopique disposé dans le plan de référence et indiquant la variation de position angulaire mesurée par le capteur lorsque le coeur tourne et d'un codeur angulaire disposé au niveau de l'axe perpendiculaire au plan de référence du coeur, signal représentant la variation de position angulaire mesurée par ce codeur, par rapport à un axe de référence donné, l'axe de référence du capteur gyroscopique par exemple.

Ces courbes illustrent le fait que les informations délivrées par les capteurs du plan de référence du coeur sont portées par des signaux électriques modulées en amplitude avec une période correspondant à la vitesse de rotation du coeur, avec une amplitude maximale fonction de la latitude considérée.

Par exemple, les sorties des capteurs gyroscopiques Gh1 et Gh2, en supposant ces capteurs de précision suffisante pour mesurer la rotation terrestre, sont des sinusoïdes d'amplitude égale à la valeur de la rotation terrestre à la latitude considérée.

Par suite l'observation de ces signaux modulés permet, en mesurant la phase temporelle de ces signaux, et l'écart temporel qui les sépare, notamment aux instants de franchissement des axes temporels (passage par zéro) du signal fourni par le codeur disposé suivant l'axe perpendiculaire au plan de référence (axe de rotation en azimut), de comparer les direction pointées lors du passage aux points cardinaux Nord, Sud, Est et Ouest avec les directions indiquées par le codeur angulaire de l'axe d'azimut. La mesure des écarts permet, moyennant la mise en oeuvre d'un traitement mathématique simple de type filtrage par exemple, de déterminer un cap avec une très faible erreur.

On obtient ainsi des performances accrues de plusieurs ordres de grandeur, issues non pas de l'emploi de capteurs ayant une stabilité intrinsèque exceptionnelle, mais de l'exploitation de caractéristiques physiques prédictibles, et aisément reproductibles.

Le principe de l'invention consiste donc à filtrer le signal délivré par le capteur gyroscopique considéré, signal sinusoïdal de mesure noyé dans le bruit général du capteur, par filtrage numérique par exemple, le filtre mis en oeuvre étant un filtre passe bande centré sur la période_de rotation du coeur. Un tel filtrage permet avantageusement d'éliminer le bruit situé en dehors de la bande d'intérêt de sorte que le signal obtenu est un signal sinusoïdal affecté d'un bruit résiduel correspondant à la dérive du capteur au cours du temps; ce bruit étant d'autant plus faible que la fréquence de la sinusoïde est proche du creux de la variance d'Allan et que ce creux est bas.

Autrement dit, le principe mise en oeuvre dans le cadre de l'invention consiste en ce qu'on utilise la rotation du coeur pour s'affranchir du bruit hors bande des capteurs alors que le bruit dans la bande qui ne peut pas être filtré par un passe bande est simplement minimisé par le choix du point de fonctionnement lié à la forme de la courbe d'Allan.

Ce principe de fonctionnement peut être mis en oeuvre en utilisant divers types de systèmes inertiels avec un coeur comportant un nombre de degrés de liberté plus ou moins important par rapport au porteur, pour autant que la mise en rotation du coeur autour d'un axe perpendiculaire à son plan de référence, défini par deux capteurs gyroscopiques, orientés selon deux axe distincts puisse être réalisée, et que l'on puisse disposer de la mesure angulaire réalisée par le codeur mesurant la rotation du coeur autour de cet axe.

Différentes variantes possibles du dispositif sont bien entendu envisageables selon les coûts et les performances désirées, avec un nombre réduit de senseurs ou par exemple avec l'utilisation de différentes technologies de gyroscopes, ou de gyromètres ainsi qu'avec différentes technologies d'accéléromètres. En vertu des principes expliqués précédemment, ces différentes variantes ont en commun de permettre d'obtenir un système performant à l'aide de senseurs de performance moyenne.

Il est ainsi possible de panacher ces technologies et dans certains cas au sein d'une même technologie, de panacher gyroscope ou gyromètre selon les avantages qui en résultent.

Il est également possible d'utiliser un senseur gyroscopique en gyroscope jusqu'à une certaine fréquence et en gyromètre au-delà.

Il est de même possible non pas d'imposer à l'axe d'azimut, perpendiculaire au plan de référence, une rotation continue, mais une rotation alternée, une rotation de forme trapézoïdale par exemple, pour laquelle le mouvement autour de l'axe vertical est une rotation de va-et-vient avec un débattement angulaire prédéfini, de façon à privilégier les durées d'observation d'un axe du plan de référence selon l'axe Est-Ouest ou un nombre discret d'axes prédéfinis, par exemple les axes Est, Ouest, Nord et Sud.

Il est, par ailleurs, possible d'envisager un grand nombre de variantes de modes de rotation, les rotations continues ou de formes trapézoïdales évoquées ci-dessus étant des cas particuliers.

L'amortissement de l'oscillation de Schuler qui, de manière connue, perturbe la stabilité de l'assiette du coeur et les informations délivrées par la centrale inertielle peut être réalisée à l'aide d'une information de vitesse externe comme le GPS, le loch, l'odomètre, le radar doppler ou l'anémomètre. Des accéléromètres externes permettent aussi de déterminer cet amortissement.

Si l'on considère l'ensemble des variantes évoquées précédemment on constate qu'il est ainsi possible, du fait de la mise en rotation du coeur, de réaliser un système minimum conforme à l'invention en utilisant un seul accéléromètre dans le coeur disposé dans le plan de référence.

Cependant, un second accéléromètre disposé dans ce même plan et perpendiculaire au premier peut être utilisé, ainsi qu'un troisième accéléromètre disposé perpendiculairement au plan de référence, c'est-à-dire selon l'axe d'azimut.

Par ailleurs, un, deux ou trois accéléromètres peuvent être disposés à l'extérieur du système de façon à réaliser l'amortissement de l'oscillation de Schuler, en fonction du nombre d'accéléromètres disposés sur le coeur et selon le nombre d'informations délivrées par le système, par exemple attitude, cap et navigation.

De la même façon, seul un codeur angulaire disposé sur l'axe vertical est nécessaire pour un système dont la fonction se réduit à fournir un cap, comme par exemple pour un gyrocompas. Cependant, la présence de codeurs angulaires sur les axes tangage et roulis (cf. figure 1) peut être envisagée dans le cas où le système fonctionne comme une centrale de cap et d'attitude.

La prise en compte et le traitement des informations telles que le cap ou l'attitude, commandes élaborées par le ou les accéléromètres du système disposés dans le plan de référence, peut également permettre de définir la position et la vitesse du porteur comme dans le cas d'un système de navigation.

Un seul gyroscope ou gyromètre à axe d'entrée orienté selon le plan de référence, utilisé pour son point bas de variance d'Allan compatible de la précision souhaitée pour le système de navigation, est indispensable pour obtenir une observation des rotations dans le plan horizontal performante à long terme.

Un second gyroscope ou gyromètre à axe d'entrée orienté selon le plan de référence et disposé perpendiculairement au premier est nécessaire pour assurer un contrôle à court terme de l'orientation du coeur selon le plan horizontal. Cependant, sa performance de stabilité peut être moindre.

De la même façon, il n'est pas indispensable de réaliser un trièdre de capteurs selon des angles droits, différentes configurations sont possibles à partir du moment où elles permettent de reconstituer les mouvements selon les trois dimensions.

Quand les capteurs supposés horizontaux ne sont pas à angle droit du capteur vertical, ils détectent, en plus des rotations du coeur autour du plan horizontal, les projections de la rotation du coeur selon l'axe vertical.

Cette option peut être avantageuse pour réduire certains défauts spécifiques à certaines technologies de capteurs: zone aveugle des gyroscopes laser ou moyenne des dérives des gyroscopes vibrants par exemple.

Cette façon de procéder entre, naturellement, dans le champ d'application de la présente invention, dans la mesure où, même si cette injection de rotation continue réalisée par la projection de la rotation selon l'axe d'azimut contribue à l'abaissement de ce point bas en réduisant ces défauts spécifiques apparents, le point bas de la variance d'Allan est néanmoins exploité pour ce qu'il apporte en propre.

Des réalisations sont également possibles, qui s'appuient sur le principe de rotation ou d'oscillations défini par l'invention et pour lesquelles les axes roulis et tangage de la plateforme à cardans sont figés ou supprimés et pour lesquelles le coeur tourne seulement autour de son axe d'azimut.

Dans ce cas, il est possible d'utiliser les informations modulées délivrées par les senseurs portés par le coeur, capteurs gyroscopiques et accéléromètre(s) pour reconstituer une plateforme virtuelle et ainsi se ramener au cas d'une plateforme pour centrale de navigation.

Enfin, des réalisations sont encore possibles qui s'appuient sur le principe de rotation ou d'oscillations défini par l'invention et pour lesquelles un plateau tournant portant le coeur est fixé à l'axe d'azimut d'une plateforme à cardans classique.

On se retrouve alors dans une configuration 4 axes, avec axe d'azimut redondé. Dans ce cas, il est possible d'utiliser les informations des senseurs portés par le plateau tournant pour reconstituer toutes les informations nécessaires au système à partir des signaux des senseurs modulés par la rotation ou les oscillations du plateau appliquées au coeur.

En vertu des principes expliqués précédemment, ceci permet d'obtenir un système performant à l'aide de senseurs de performance moyenne.

Un exemple typique de réalisation de la présente invention consiste à utiliser un coeur monté sur un système de cardans à trois axes, comportant trois capteurs gyroscopiques, gyroscope ou gyromètres, dont les axes de mesure sont orientés selon un trièdre orthogonal, le système étant pourvu de moyens pour maintenir le plan de référence du coeur dans le plan horizontal. De la sorte l'axe perpendiculaire au plan de référence est maintenu à la verticale.

Le coeur comporte également au moins un accéléromètre dont l'axe de mesure est perpendiculaire à l'axe vertical et compris dans le plan de référence.

Cet ensemble constitue ainsi un coeur de senseurs inertiels (capteurs gyroscopiques et accéléromètre(s)) porté par trois axes de cardans dont un axe est mis en rotation inertielle à partir de la mesure fournie par le gyromètre de vertical. La fréquence de rotation autour de l'axe vertical est choisie de façon à ce que sur environ une période de rotation les instabilités court terme de la dérive de l'un des deux gyromètres définissant le plan de référence (confondu avec le plan horizontal) soit minimales.

La mesure obtenue à partir de l'accéléromètre permet de fournir des informations qui sont utilisées pour maintenir le coeur selon une assiette horizontale alors que le porteur est en mouvement.

Les informations obtenues à partir des deux capteurs gyroscopiques définissant le plan de référence, se présentent sous la forme de signaux modulées du fait de l'action de la composante horizontale de la rotation terrestre sur ces deux capteurs dont les axes de mesure sont placés à l'horizontale. Elles permettent d'identifier une orientation par rapport au Nord géographique.

Les capteurs (codeurs) angulaires portés par les axes de cardans fournissent quant à eux des informations qui permettent de délivrer des informations de cap et d'attitude du porteur.

Les informations fournies par les gyromètres permettent ainsi d'établir la latitude du porteur et les informations fournies par l'accéléromètre permettent d'établir la longitude locale.

## Revendications

1. Système de navigation inertielle d'un porteur, comportant un coeur monté sur un système de cardans à trois axes occupant une position fixe par rapport au porteur, ledit coeur comportant des capteurs gyroscopiques permettant de déterminer sa vitesse angulaire suivant trois axes définissant un trièdre de référence, deux des axes définissant un plan de référence et le troisième axe, étant choisi perpendiculaire audit plan de référence, **caractérisé en ce qu'**il comporte en outre des moyens de commande et de contrôle configurés d'une part pour mettre le coeur en rotation continue ou alternée autour du troisième axe et d'autre part pour exploiter les informations fournies par les capteurs gyroscopiques ainsi que celles fournies par un accéléromètre placé dans le plan de référence ainsi défini, de façon à maintenir le plan de référence du coeur dans une attitude donnée par rapport au plan horizontal ou au moins à pouvoir déterminer l'attitude du plan de référence par rapport au plan horizontal et de façon à déterminer la direction du nord géographique dans le repère formé par les axes définissant le plan de référence; la rotation continue ou alternée étant effectuée selon une période déterminée, la valeur de ladite période étant définie de telle façon que pour une durée d'observation égale à cette valeur, la valeur de la variance d'Allan de l'erreur de stabilité des capteurs gyroscopiques soit inférieure à une valeur donnée définie à partir de la précision de détermination du nord géographique souhaitée.

2. Système de navigation inertielle d'un porteur selon la revendication 1, **caractérisé en ce que** les moyens de commande et de contrôle sont configurés pour exploiter les informations fournies par les capteurs gyroscopiques ainsi que celles fournies par un accéléromètre placé dans le plan de référence, de façon à déterminer l'attitude du porteur, ses coordonnées géographiques de longitude et de latitude et d'altitude, ainsi que son vecteur vitesse.

3. Système de navigation inertielle d'un porteur selon l'une des revendications 1 ou 2, **caractérisé en ce que** les capteurs gyroscopiques comportent des gyroscopes et/ou des gyromètres.

4. Système de navigation inertielle d'un porteur selon l'une quelconque des revendications 1 à 3, **caractérisé en ce que** les deux capteurs gyroscopiques définissant le plan de référence sont orientés suivant deux axes perpendiculaires de sorte que le trièdre de référence ainsi formé est un trièdre trirectangle.

5. Système de navigation inertielle d'un porteur selon l'une quelconque des revendications 1 à 4, **caractérisé en ce que** les moyens de commande et de contrôle sont configurés de façon à maintenir le plan de référence du coeur dans le plan horizontal, de telle sorte que le troisième axe du trièdre de référence est dirigé à la verticale.

6. Système de navigation inertielle selon l'une quelconque des revendications 1 à 5 dans lequel un ou deux axes de cardans sont bloqués en rotation, seul le troisième axe étant équipé d'un codeur angulaire.

7. Procédé pour assurer la navigation inertielle d'un porteur comportant un système de navigation inertielle comportant lui-même un coeur monté sur un système de cardans à trois axes occupant une position fixe par rapport au porteur, ledit coeur comportant des capteurs gyroscopiques permettant de déterminer sa vitesse angulaire suivant trois axes définissant un trièdre de référence, deux des axes définissant un plan de référence et le troisième axe, étant choisi perpendiculaire audit plan de référence, **caractérisé en ce que** le coeur est mis en rotation continue ou alternée, selon une période déterminée, autour du troisième axe; la rotation continue ou alternée étant effectuée selon une période déterminée, la valeur de ladite période étant définie de telle façon que pour une durée d'observation égale à cette valeur, la valeur de la variance d'Allan de l'erreur de stabilité des capteurs gyroscopiques soit inférieure à une valeur donnée définie à partir de la précision de détermination du nord géographique souhaitée; les informations fournies par les capteurs gyroscopiques ainsi que celles fournies par un accéléromètre placé dans le plan de référence, étant exploitées de façon, d'une part, à maintenir le plan de référence du coeur dans une attitude donnée par rapport au plan horizontal ou au moins à pouvoir déterminer l'attitude du plan de référence par rapport au plan horizontal et de façon, d'autre part, à déterminer la direction du nord géographique dans le repère formé par les axes définissant le plan de référence.

8. Procédé selon la revendication 7, **caractérisé en ce que** pour déterminer l'attitude du plan de référence par rapport au plan horizontal et déterminer la direction du nord géographique dans le repère formé par les axes définissant le plan de référence, on réalise les opérations suivantes:

- acquisition des informations modulées délivrées par les senseurs inertiels dont les axes de mesure sont situés dans le plan de référence et l'information fournie par un codeur angulaire codant la rotation du troisième axe;
- élaboration de commandes de pilotage des moteurs cardans perpendiculaires au troisième axe, de façon à déterminer et contrôler l'assiette du plan de référence et de façon à mettre en rotation le troisième axe à partir des informations du capteur gyroscopique porté par cet axe, lesdites commandes étant élaborées à partir desdites informations projetées à l'aide de matrices dans les axes de rotation des cardans;
- détermination, de la phase et de l'amplitude de la modulation des signaux délivrés par les capteurs gyroscopiques et l'accéléromètre dont les axes de mesure sont situés dans le plan de référence, la phase de la modulation définissant l'information d'angle d'orientation des axes de mesure par rapport au Nord géographique, l'amplitude de la modulation définissant l'information d'angle de la Latitude locale, les vitesses selon le méridien local ainsi que le parallèle local et, par intégration, les déplacements selon ces directions;
- calcul de l'assiette du porteur, à partir des données des codeurs angulaires des axes de cardans.

Fig. 1

Variance d'Allan
( µg ou °/h rms )

Temps
d'observation
(s ou mn)

# Fig. 2

Variance d'Allan
( µg ou °/h rms )

PG

T₀

Temps
d'observation
(s ou mn)

# Fig. 3

EP 4 403 874 A2

Signal gyroscopique filtré

A/2

-A/2

Temps d'observation

Angle mesuré par le codeur d'axe vertical

π

-π

Temps d'observation

Ecart constaté

Fig. 4

12